# EUROPEAN PATENT APPLICATION

(11) **EP 2 403 241 A1**
(43) Date of publication of application: **04.01.2012**
(21) Application number: 10290360.6
(22) Date of filing: 30.06.2010
(51) Int. Cl.: H04N 7/14, G11B 27/00, G11B 27/034, H04L 12/58

(54) **Video message apparatus and method**

(71) Applicant: Alcatel Lucent, 75007 Paris (FR)
(72) Inventor: Baynaud, Erwan, 75013, Paris (FR); Gueret, Olivier, 92310 Sèvres (FR); Barraud de Lagerie, Tristan, 75015, Paris (FR); Vinet, Romain, 75018, Paris (FR); Cathala, Stéphane, 75007, Paris (FR)
(74) Representative: Cockayne, Gillian

(57) **Abstract**

Apparatus for producing a video message comprises: a message processor or client application 2 operative in a first mode to record output from a webcam recorder 4 for capturing video images and operative in a second mode to record output from a screen capture device 5 for capturing images shown on a display, the message processor 2 being switchable by a user between the first and second modes. Audio may also be recorded by an audio recorder 6. The apparatus also includes a metadata creator 7 for providing metadata derived from user inputs to describe how recorded outputs are combined to create the video message. A media composer 9 uses the metadata to assemble the video message from the recorded video outputs.

## Description

### FIELD OF THE INVENTION

The present invention relates to video message apparatus and method.

### BACKGROUND

Various applications and devices are currently available to users which enable video communication between remote participants in a real time call. For example, a user is able to capture images of themselves using a webcam, which may be connected to a computer or a network, and stream it to another user via the Internet. Applications also exist which allow a person to make a video recording using a webcam and send the recording as a video message to a recipient, who is then able to open and replay the message at a convenient time.

### BRIEF SUMMARY

According to a first aspect of the invention, apparatus for producing a video message comprises: a message processor operative in a first mode to record output from a webcam for capturing video images and operative in a second mode to record output from a screen capture device for capturing images shown on a display, the message processor being switchable by a user between the first and second modes; and a metadata creator for providing metadata derived from user inputs to describe how recorded outputs are combined to create the video message. By employing the invention, a user is able to combine webcam recordings and screen recordings in a single video message.

In one embodiment, means are included for recording audio and including the audio as part of the video message. the audio may be selected for only parts of the video message by the user.

A media composer may be included to combine the outputs using metadata from the metadata creator to create the video message. At the end of recording an output, an entry may added to a metadata file or stream specifying a unique identifier associated with the recorded output.. The metadata creation is triggered by the user interacting with the message processor or application. At each phase of the creation of the media, at the end of a recording, an entry is added to the metadata file/stream specifying a unique identifier associated to the video created, and a unique identifier for the audio if the mute mode is not activated. When the user terminates the creation of the video message, the metadata file is sent to a server, say, to be used in combining the parts of the video message, or, if it is streamed to the server, the metadata stream is closed.

According to a second aspect of the invention, a method for producing a video message includes recording output from a webcam for capturing video images using a message processor operative in a first mode and recording output from a screen capture device for capturing images shown on a display using a message processor operative in a second mode, the message processor being switchable by a user between the first and second modes. A metadata creator is used to provide metadata derived from user inputs to describe how recorded outputs are combined to create the video message.

According to a third aspect of the invention, a data storage medium stores a machine-executable program for performing a method for producing a video message including the steps of:
recording output from a webcam for capturing video images using a message processor operative in a first mode;
recording output from a screen capture device for capturing images shown on a display using a message processor operative in a second mode,
the message processor being switchable by a user between the first and second modes; and
   using a metadata creator to provide metadata derived from user inputs to describe how recorded outputs are combined to create the video message.

### BRIEF DESCRIPTION OF THE DRAWINGS

Some embodiments of the present invention will now be described by way of example only, and with reference to the accompanying drawings, in which:
Figure 1 schematically illustrates an apparatus in accordance with the invention; and
Figure 2 is a schematic flowchart illustrating the operation of the apparatus shown in Figure 1.

### DETAILED DESCRIPTION

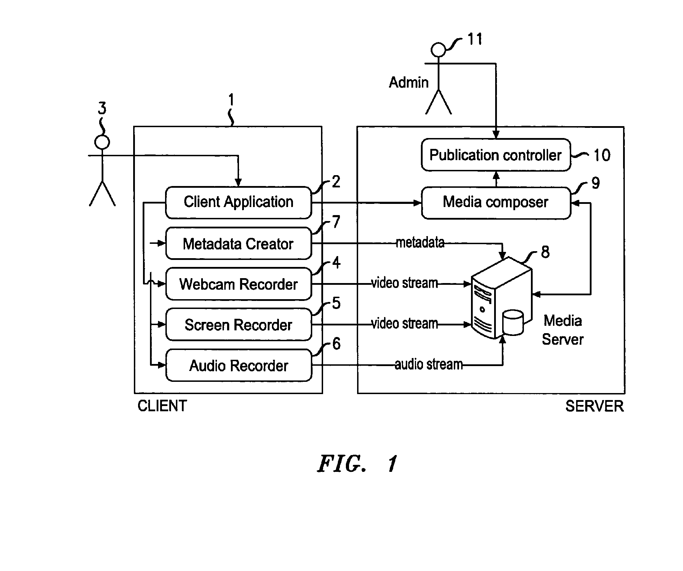

With reference to Figure 1, a client 1 hosts a message processor or client application 2, which is the interface provided to the user 3 to record video messages. The user has available a webcam recorder 4 which is set up to record the surroundings, typically to provide images of the user himself, a screen recorder 5 for capturing the image shown on a display such as, for example, a computer monitor, and an audio recorder 6. The user assembles his video message by using the client application 2 to switch as appropriate between a first mode in which the output of the webcam recorder 4 is selected and a second mode in which the output of the screen reorder 5 is selected. In any particular video message, the user may choose to record only in one of the modes or in a combination of them. The audio recorder 6 may also be controlled using the client application 2 so that it is set to mute if no audio is wanted by the user or selected in combination with the first and/or second mode where audio is required in addition to video content.

In this embodiment, if the user chooses to record the screen content, he may optionally select a partial region only of the screen rather than the entire screen.

The user triggers the start and finish of the recording process. After making a recording, the user is given the option of keeping the recording or deleting it and trying again. When the recording is satisfactory, he confirms it. If required, another recording may be made to add to the first one in the final video message or the video message may be sent if it is complete. In this embodiment, the user may switch between first and second modes without pausing if desired and the client application 2 captures the changeover information. In an alternative embodiment, it is necessary for the user to specifically indicate the start and stop points of a section being recorded.

Provision is also included for saving a message as a draft for further editing or finishing at a later time, or to be sent at a later time.

A metadata creator 7 records the user inputs as the user assembles the video message and creates a metadata description which describes the combination wanted by the user for his recording. It provides the order in which different recorded sections are to be put together to form the complete video message. Each recorded section is identified by a unique identifier. At each phase of the creation of the media, at the end of a recording, an entry is added to the metadata file or stream specifying the unique identifier associated to the recording created, and also a unique identifier for the audio if the mute mode is not activated. When the user terminates the creation of the media, the metadata file is sent to a media server 8or, if it is streamed to the server, the stream is closed by the client application 2.

The metadata are stored remotely on the media server 8 which also receives streams from the webcam recorder 4, the screen recorder 5 and the audio recorder 6.

The webcam recorder 4, screen recorder 5 and audio recorder 6 are each triggered by the client application 2 as dictated by the user. A file for each section recorded is created on the media server 8, each file being associated with a database entry with a unique identifier.

A media composer 9 uses the metadata collected by the client application 2 and sent to the media server 8 to create a new media, that is, to create the video message itself, composed from the webcam, screen and audio recordings stored on the media server 8.

After the video message has been created by the media composer 9, a publication controller 10 allows an administrator 11 to configure the output format of the video message. According to the context of use of the system, it may be, for example, an email, a "tweet" on twitter, a Facebook message and so on. The video message may be configured for publication on a video sharing service such as YouTube.

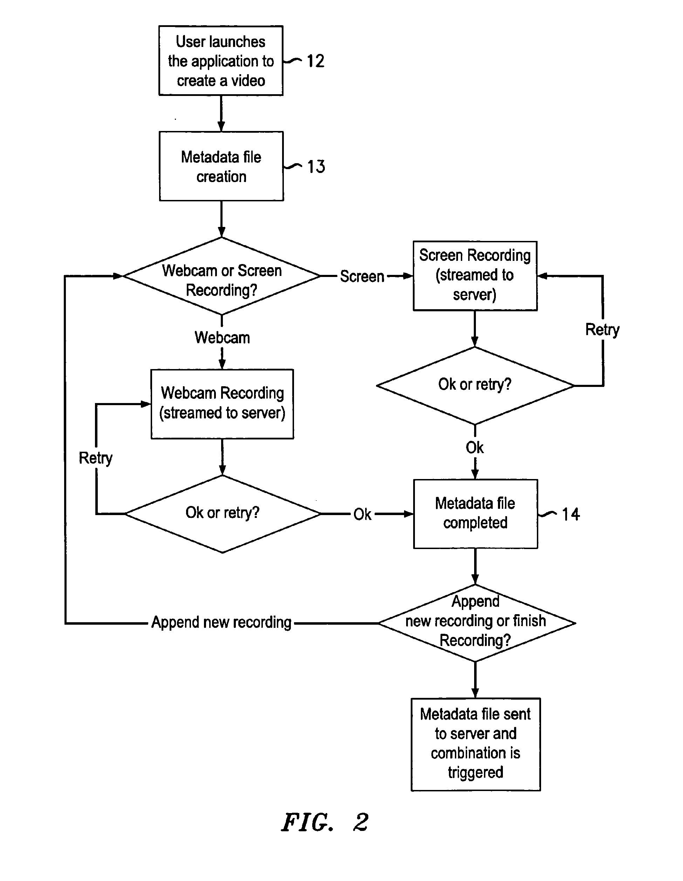

The flowchart shown in Figure 2 illustrates steps involved in creating a video message using the apparatus shown in Figure 1. The user launches the client application 2 at 12, triggering the creation of a metadata file at 13. Following satisfactory webcam or screen recording, the metadata file is completed at step 14. Any additional recordings are made and then the metadata file is sent to the media server 8 and combination of the recordings is triggered to assemble the complete video message.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. also be included. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The present invention may be embodied in other specific forms without departing from its spirit or essential characteristics. The described embodiments are to be considered in all respects only as illustrative and not restrictive. he scope of the invention is, therefore, indicated by the appended claims rather than by the foregoing description. All changes that come within the meaning and range of equivalency of the claims are to be embraced within their scope.

## Claims

1. Apparatus for producing a video message comprising: a message processor operative in a first mode to record output from a webcam for capturing video images and operative in a second mode to record output from a screen capture device for capturing images shown on a display, the message processor being switchable by a user between the first and second modes; and a metadata creator for providing metadata derived from user inputs to describe how recorded outputs are combined to create the video message.

2. Apparatus as claimed in claim 1 and comprising means for recording audio and including the audio as part of the video message.

3. Apparatus as claimed in claim 1 or 2 and including a media composer for combining the outputs using metadata from the metadata creator to create the video message.

4. Apparatus as claimed in any preceding claim and including a publication controller arranged to received the created video message and apply formatting dependent on where the video message is to be published.

5. Apparatus as claimed in any preceding claim and including a controller for selecting an area of the display to be recorded when the message recorder is operating in the second mode.

6. Apparatus as claimed in any preceding claim and wherein, at the end of recording an output, an entry is added to a metadata file or stream specifying a unique identifier associated with the recorded output.

7. Apparatus as claimed in any preceding claim and wherein, at the end of recording an output, an entry is added to a metadata file or stream specifying a unique identifier associated with audio unless a mute mode is activated.

8. A method for producing a video message including the steps of:
recording output from a webcam for capturing video images using a message processor operative in a first mode;
recording output from a screen capture device for capturing images shown on a display using a message processor operative in a second mode,
the message processor being switchable by a user between the first and second modes; and
using a metadata creator to provide metadata derived from user inputs to describe how recorded outputs are combined to create the video message.

9. The method as claimed in claim 8 and including the steps of recording audio; and including the audio as part of the video message.

10. The method as claimed in claim 8 or 9 and including using a media composer to combine the outputs using metadata from the metadata creator to create the video message.

11. The method as claimed in any of claim 8, 9 or 10 and arranging for a publication controller to receive the created video message and to apply formatting dependent on where the video message is to be published.

12. The method as claimed in any of claims 8, 9, 10 or 11 and including using a controller to select an area of the display to be recorded when the message recorder is operating in the second mode.

13. The method as claimed in any of claims 8 to 12 and including, at the end of recording an output, adding an entry to a metadata file or stream specifying a unique identifier associated with the recorded output.

14. The method as claimed in any of claims 8 to 13 and wherein, at the end of recording an output, adding an entry to a metadata file or stream specifying a unique identifier associated with audio unless a mute mode is activated.

15. A data storage medium storing a machine-executable program for performing a method for producing a video message including the steps of:
recording output from a webcam for capturing video images using a message processor operative in a first mode;
recording output from a screen capture device for capturing images shown on a display using a message processor operative in a second mode,
the message processor being switchable by a user between the first and second modes; and
using a metadata creator to provide metadata derived from user inputs to describe how recorded outputs are combined to create the video message.
